# EUROPEAN PATENT APPLICATION

(11) **EP 4 516 599 A1**
(43) Date of publication of application: **05.03.2025**
(21) Application number: 24189282.7
(22) Date of filing: 17.07.2024
(51) Int. Cl.: B60R 25/08

(54) **ANTITHEFT SYSTEM FOR VEHICLE**

(30) Priority: 31.08.2023 JP 2023141323
(71) Applicant: Suzuki Motor Corporation, Shizuoka 432-8611 (JP)
(72) Inventor: YAMANOUCHI, Takeshi, Hamamatsu-shi 432-8611 (JP)
(74) Representative: Plasseraud IP

(57) **Abstract**

An antitheft system for a vehicle includes an electric parking brake to be electrically operated and configured to restrict rotation of wheels of the vehicle, a specific switch configured to activate the electric parking brake, and a control device associated with specific operations for releasing the electric parking brake set in advance, which is configured to provide an antitheft mode for permitting the electric parking brake to be released upon detecting the specific operations but for inhibiting the electric parking brake from being released without detecting the specific operations, thus making automatic transition to the antitheft mode under a predetermined condition.

## Description

### BACKGROUND OF THE INVENTION

### Field of the Invention

The present invention relates to an antitheft system for a vehicle.

### Description of the Related Art

As vehicles having a plurality of wheels (e.g., front wheels, rear wheels), it is possible to mention automobiles having internal combustion engines, hybrid vehicles having internal combustion engines and electric motors, and electric vehicles having electric motors driven by rechargeable batteries. As braking mechanisms, vehicles have been equipped with parking brakes or side brakes to be operated at the time of parking in addition to drum brakes or disc brakes interlocked with brake pedals. Instead of manual parking brakes, it is possible to use electric parking brakes (EPBs) using electric motors. The electric parking brake can activate or release the function of a parking brake using a switch on a console provided at a driver's seat in a vehicle. The electric parking brake activates the function of a parking brake by rotating an electric motor via an electronic control unit (ECU) mounted on a vehicle. More specifically, the electric parking brake applies braking for restricting rotation of wheels by way of the forward rotation of an electric motor or releases braking on wheels by way of the reverse rotation of an electric motor.

The electric parking brake provides a simple measure to park a vehicle compared with a manual operation, and therefore the electric parking brake can improve security of a vehicle by preventing any theft of a vehicle when parked. However, there is a fear that a vehicle might be stolen by the third party who would start an engine with his/her fraudulent activity. Patent Document 1 (i.e., Japanese Patent Application Publication No. 2021-84443) discloses an antitheft device for a vehicle, which allows a driver to perform a lock operation for restricting rotation of wheels or a release operation. That is, Patent Document 1 discloses a technology for releasing an electric parking brake when performing an antitheft operation including an operation of another operation unit than a parking-brake operation unit to be operated when releasing the operation. The antitheft operation can be changed by an owner (or a driver).

Patent Document 1 provides the antitheft device including a parking-brake operation unit (or an electric parking brake switch) and an electric parking device for performing a lock operation for restricting rotation of wheels by pressing friction materials against any rotating body to be rotated integrally with wheels when driven by an electric motor. In a power-on event of a vehicle in the state of wheels being restricted in rotation, the antitheft device inhibits a release operation for releasing restriction of rotation of wheels when a driver who entered the vehicle fails to perform an antitheft operation. On the other hand, the antitheft device cancels inhibition of the release operation when a driver performs an antitheft operation. In Patent Document 1, the antitheft device is designed to perform a lock operation of wheels or a release operation according to the presence/absence of an antitheft operation linked with a power-on event. However, any person other than a driver (or an owner) of a vehicle can perform an antitheft operation. Anyway, it is necessary to develop a technology superior in convenience when using an electric parking brake for theft prevention with security ensured for a vehicle.

### SUMMARY OF THE INVENTION

Accordingly, the present invention aims to provide an antitheft system for a vehicle, which can release an electric parking brake by specific operations set in advance regardless of power-on/off events of a vehicle.

According to the present invention, an antitheft system for a vehicle includes an electric parking brake to be electrically operated and configured to restrict rotation of wheels of the vehicle, a specific switch configured to activate the electric parking brake, and a control device associated with specific operations for releasing the electric parking brake set in advance, which is configured to provide an antitheft mode for permitting the electric parking brake to be released upon detecting the specific operations but for inhibiting the electric parking brake from being released without detecting the specific operations, thus making automatic transition to the antitheft mode under a predetermined condition.

The predetermined condition of the control device may be a power-off event of power for supplying electric power to a plurality of electronic components mounted on the vehicle upon detecting activation of the electric parking brake.

The predetermined condition of the control device may be an event of detecting that a key of the vehicle is brought outside the vehicle.

The control device is configured to selectively make the automatic transition to the antitheft mode or a transition by a user operation.

The control device is configured to receive a setting of an inhibition condition for inhibiting the automatic transition to the antitheft mode.

The inhibition condition set to the control device may be a predetermined geographical region set by a user.

The inhibition condition set to the control device may indicate at least one of a predetermined date, time, and weekday set by a user.

It is possible to provide a communication device configured to establish a wireless communication with a mobile terminal. The specific operations can be performed by using a digital key having a key function for the vehicle and a digital key of the mobile terminal having an application realizing a function to release the electric parking brake.

The specific operations can be set to the control device by operating the mobile terminal.

The specific operations may be combinations of a sensor and/or a switch of the vehicle having a communication function or a function of recognizing ON/OFF states via an in-vehicle network.

The control device may include a screen display unit for displaying a setting content of the specific operations.

### EFFECT OF THE INVENTION

According to the present invention, it is possible to release an electric parking brake by specific operations set in advance, regardless of power-on/off events of a vehicle.

### BRIEF DESCRIPTION OF THE DRAWINGS

Fig. 1 is a block diagram showing an antitheft system for a vehicle according to the embodiment of the present invention.
Fig. 2 is a time chart showing an example of specific operations for releasing an antitheft mode using an electric parking brake mounted on a vehicle.
Fig. 3 is a mode transition diagram of the antitheft system for a vehicle according to the first embodiment of the present invention.
Fig. 4 is a mode transition diagram of the antitheft system for a vehicle according to the second embodiment of the present invention.
Fig. 5 is a flowchart showing an operation procedure for releasing the antitheft mode of the antitheft system for a vehicle according to the embodiment of the present invention.
Fig. 6 is a flowchart showing a first procedure for activating the antitheft mode of the antitheft system for a vehicle according to the embodiment of the present invention.
Fig. 7 is a flowchart showing a second procedure for activating the antitheft mode of the antitheft system for a vehicle according to the embodiment of the present invention.

### DETAILED DESCRIPTION

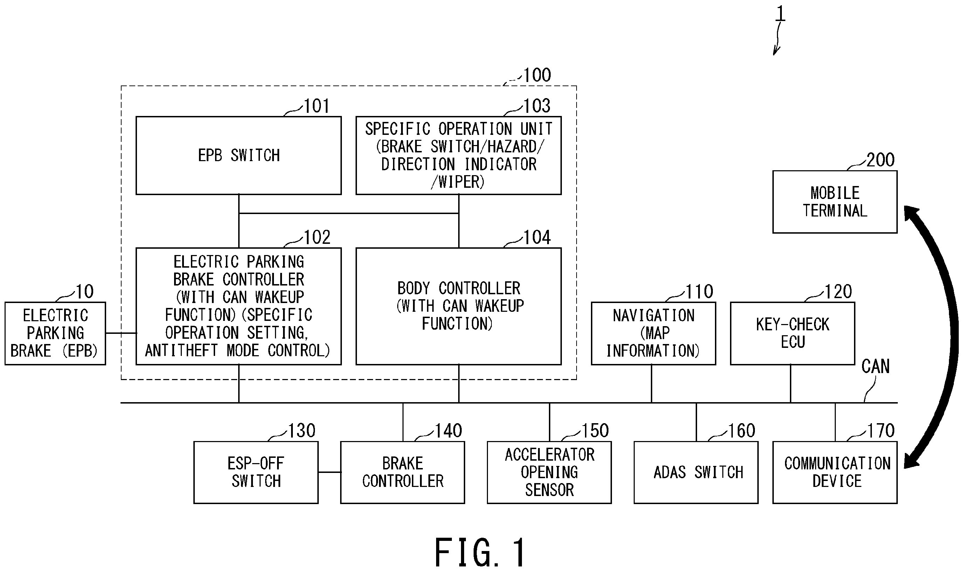

Hereinafter, various embodiments of an antitheft system for a vehicle according to the present invention will be described with reference to Figs. 1 to 7.

Fig. 1 shows an antitheft system 1 for a vehicle according to the embodiment of the present invention. In the antitheft system 1 shown in Fig. 1, an electric parking brake (EPB) 10, a control device 100, a navigation system 110, a key-check ECU (i.e., an electronic control unit) 120, an anti-skid (EPS: electronic stability program) off switch 130, a brake controller 140, an accelerator opening sensor 150, an advance driver assistance system (ADAS) switch 160, and a communication device 170 are connected together via an in-vehicle network (CAN: Controller Area Network).

In Fig. 1, an EPB switch 101 and an EPB controller 102 are connected by a hard wire. Similarly, the EPB controller 102 is connected to a specific operation unit 103 by a hard wire, and the specific operation unit 103 is connected to a body controller 104 by a hard wire.

In a vehicle, front wheels and rear wheels are equipped with hydraulic brakes such that hydraulic pressure may be increased or decreased according to an amount of depression on a brake pedal to adjust a braking force on wheels.

The EPB 10 provided separately from normal hydraulic brakes should be located close to rear wheels of a vehicle, wherein the EPB 10 is adjusted in braking force using an electric signal. It is possible to switch over the EPB 10 to be activated or released by an operation switch. Specifically, a motor is operated using an electric signal output from the EPB controller 102 such that sliding members may be pressed against rear wheels of a vehicle, thus generating a braking force. The braking force of the EPB 10 is generated independently of the braking force of the hydraulic brake. Accordingly, even when hydraulic brakes cannot operate due to failures, the EPB 10 can apply braking to rear wheels of a vehicle independently.

The control device 100 includes the electric parking brake (EPB) switch 101, the electric parking brake (EPB) controller 102, the specific operation unit 103, and the body controller 104; however, this is not a restriction. Although the EPB switch 101 is a specific switch for activating the EPB 10, it is possible to provide another switch with the function of activating or releasing the EPB switch 10.

The EPB controller 102 can be solely used as a main part of the control device 100, while the EPB switch 101, the specific operation unit 103, and the body controller 104 can be provided outside the control device 100. In this case, the EPB controller 102 serving as the control device 100 is configured of a processor (e.g., a CPU) configured to implement a predetermined function according to predetermined programs.

In the non-setting state of the antitheft mode or the released state of the antitheft mode after setting, for example, the control device 100 outputs a command to activate the EPB 10 upon detecting an ON-event of the EPB switch 101 in the released state of the EPB 10. In addition, the control device 100 outputs a command to release the antitheft mode upon receiving a notice that specific operations are performed from the specific operation unit 103 in the setting state of the antitheft mode. Furthermore, in the non-setting state of the antitheft mode or the released state of the antitheft mode after setting, the control device 100 outputs a command to release the EPB 10 upon detecting an ON-event of the EPB switch 101 when the EPB 10 is operated. Details of the antitheft mode will be described later.

The electric parking brake switch 101 is a manually-operable switch mounted on a console on the side of a driver's seat in a vehicle.

The electric parking brake (EPB) controller 102 has a CAN wakeup function to suppress the CAN traffic by responding to a specific CAN frame alone. The EPB controller 102 activates the EPB 10 according to an operation of the EPB switch 101, thus controlling the antitheft mode using the EPB 10 from being released according to specific operations.

The specific operation unit 103 indicates a collective term for a plurality of operators (e.g., a brake switch, a hazard, a directional indicator switch, and a wiper), which may include the ESP-off switch 130 and the ADAS switch 160 as well. Upon detecting a predetermined operator being operated, the EPB controller 102 is notified that specific operations are made to permit cancellation of the antitheft mode using the EPB 10.

The body (vehicle body) controller 104 having a CAN wakeup function is configured to control a plurality of electronic components (e.g., ECUs for electronically controlling various control mechanisms of a vehicle body) connected to the in-vehicle network (CAN). For example, the body controller 104 applies brake on a vehicle according to the brake switch being operated, turns on or off hazard lights, turns on or off a directional indicator (e.g., a winker), and activates or stops a wiper.

The vehicle is provided with an accessory (ACC) power source for supplying electric power to various electronic components, and an ignition (IG) power source for activating an engine (or an electric motor). In this connection, an operation to activate or stop an engine (or an electric motor) will be referred to as ignition (IG) on/off events, and therefore a period from activation to stoppage of an engine or the like will be referred to as an IG cycle. Since the EPB controller 102 and the body controller 104 are each provided with a CAN wakeup function, it is possible to recognize specific operations even in an ignition (IG) off event and to thereby transmit or receive a predetermined signal (e.g., an EPG-on/off command) via a CAN.

The navigation system 110 serves as a touch-panel display mounted on a console near a driver's seat of a vehicle. The navigation system 110 has the function of a positioning device for identifying the current position (e.g., a parking position) of a vehicle using a global positioning system (GPS), which can display the current position of a vehicle together with the map information. The navigation system 110 does not need to display the map information, but it may have the function of an input device for performing various settings for a vehicle. When a mobile terminal 200 has a mobile navigation system or an application, the mobile terminal 200, as similar to the navigation system 100, may have the function of an input device for displaying the map information and for performing various settings for a vehicle.

The key-check ECU 120 is configured to perform a key authentication for a vehicle, but it is possible to additionally authenticate an electronic key having a near field communication (NFC) capacity, which is not necessarily limited to a physical key (e.g., an ignition switch). In this connection, the key-check ECU 120 may have the function of a sensor for detecting the presence of a key inside a vehicle as well. When a key is brought outside of a vehicle, for example, the key-check ECU 120 can detect the presence of an electronic key by way of communication with the communication device 170.

The ESP-off switch 130 is a switch to stop an anti-skid function for preventing oversteering or understeering by stabilizing the behavior of a vehicle, which is connected to the brake controller 140 by a hard wire.

The accelerator opening sensor 150 is configured to detect an accelerator opening corresponding to an amount of depression on an accelerator pedal that is operated by a user (e.g., a driver). The accelerator opening will become 100% when the user fully depresses the accelerator pedal, while the accelerator opening will become 0% when the user does not at all depress the accelerator pedal. The accelerator opening may be changed in a range from 0% to 100% according to an amount of depression on the accelerator pedal by the user.

The mobile terminal 200 can be operated by the driver (or the owner of a vehicle). The mobile terminal 200 can wirelessly communicate with the communication device 170. The wired in-vehicle network (CAN) and the wireless communication device 170 have their individual communication functions. It is possible to check the presence of a key (or an electronic key) of a vehicle by use of an in-vehicle sensor, wherein when the key of a vehicle has the function of near field communication (NFC), the antitheft system 1 can detect whether the key is brought out of a vehicle by way of the communication device 170 or the like.

The mobile terminal 200 may be a mobile phone or a smartphone having a mobile application. The mobile terminal 200 can wirelessly communicate with the communication device 170 mounted on the vehicle, wherein it is possible to use various types of wireless communication methods such as WiFi communication, LTE communication, and Bluetooth communication. The mobile terminal 200 can download a mobile application from an application service provider (ASP). The mobile terminal 200 having a digital key implementing the key function of a vehicle may allow for various settings for a vehicle to be made on a touch panel display. In addition, the driver of a vehicle may operate the mobile application to control the vehicle to be started or stopped.

Next, specific operations for releasing the antitheft mode using the EPB 10, which is a feature of the present embodiment, will be described below.

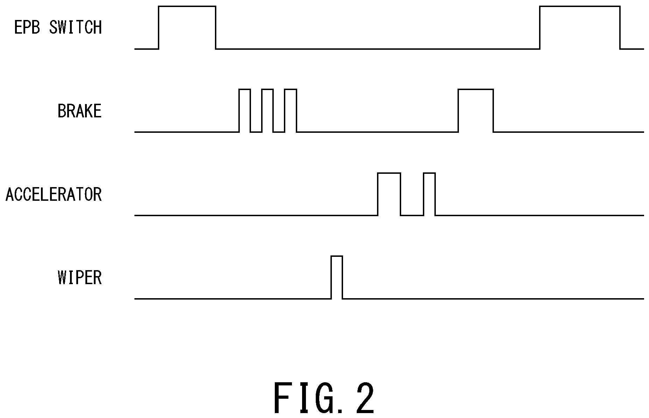

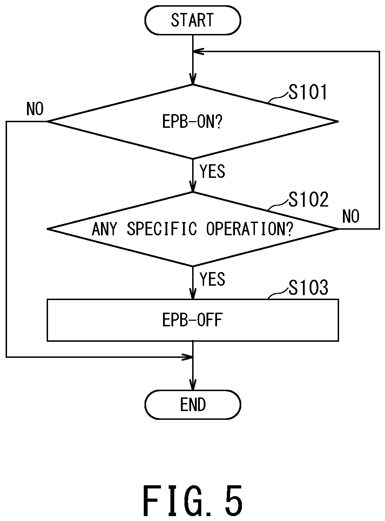

Fig. 2 is a time chart showing an example of specific operations for releasing the antitheft mode using the EPB 10. The present embodiment refers to specific operations as combinations of operations of three operators (e.g., a brake pedal, an accelerator pedal, and a wiper) in a period from an ON-timing of the EPB switch 101 (hereinafter, referred to as an EPB-on event) to an OFF timing of the EPB switch 101 (hereinafter, referred to as an EPB-off event). As shown in Fig. 5 described later, the control device 100 releases the antitheft mode upon detecting specific operations after the EPB-ON event. Any user may arbitrarily select combinations of the number of times for operating a plurality of operators (e.g., switches and sensors) related to specific operations.

Fig. 2 shows a series of specific operations after an EPB-on event with respect to a brake pedal being operated three times, a wiper being operated one time, an accelerator pedal being operated two times, and then, the brake pedal being operated one time. Any user may arbitrarily select combinations of operators (e.g., combinations of multiple operators and sensors) relating to specific operations for releasing the antitheft mode after an EPB-on event as well as the number of times of operations.

Any user can freely set combinations of switches and sensors of a vehicle for use in specific operations, which can be changed freely. Basically, the antitheft mode using the EPB 10 can be released by specific operations only known to user, and therefore it is possible to improve the security of the antitheft system 1. Since on/off operations of switches need to be recognized when setting specific operations, it is possible to simplify the setting of specific operations. Accordingly, the user may hardly make an error in user operations after setting specific operations.

To use the accelerator opening sensor 150 for setting specific operations, the user may set the accelerator opening to 70% in advance by depressing an accelerator pedal. In this case, the user does not need to accurately set the accelerator opening to 70% since a range of accelerator openings from 60% to 80% can be determined as the same user operation. It is difficult to adjust the accelerator opening because the user cannot check the accelerator opening with eyes even when the user attempts to depress an accelerator pedal at a target accelerator opening ranging from 60% to 80%. The reason why combinations of sensors and switches which can be recognized by way of communication through an in-vehicle network or which can be recognized as on/off events are used as examples of specific operations is to provide a capacity of recognizing switches and sensors in the ignition (IG) off condition.

By using a switching operation of the EPB 10 as a condition to start or stop specific operations, it is possible to clearly recognize a temporal range used for recognizing special operations by the vehicle. Since the on-event of the EPB switch 101 can be used as a trigger to start specific operations, it is possible to make complex combinations of operations of switches and the like for the time being. If no trigger is provided to recognize specific operations, according to the setting for releasing the antitheft mode by depressing a brake pedal multiple times (e.g., three times), the antitheft mode would be possibly released when the driver depresses the brake pedal five times during the driving of a vehicle. However, the present embodiment sets the trigger using the EPB switch 10 as the condition for starting specific operations, and therefore it is possible to avoid the situation in which the driver may unintentionally release the antitheft mode.

The present embodiment is designed to recognize the states of switches and sensors even in the ignition (IG) off condition. As operators (e.g., switches and sensors) which can be operated in on/off states in a vehicle, it is possible to mention an accelerator pedal, a brake pedal, a hazard switch, a directional indicator, a wiper, an ESP-off switch, an ADAS switch, or the like. As combinations of specific operations, it is possible to use combinations of the number of times for turning on or off each operator and an operation time for each operator.

It is possible to set specific operations on a setting screen of the navigation system (GPS) 110, whereas it is possible to set specific operations by way of a mobile application in the mobile terminal 200. In addition, it is possible to release the antitheft mode by way of a mobile application.

As combinations of specific operations, it is possible to use combinations of the number of times for operating on/off operators corresponding to two or more switches and sensors which can be operated on or off in a vehicle, which can be selected according to conditional settings by the driver. Using a momentary switch as the EPB switch 101, the user may perform a predetermined operation input after pressing the EPB switch 101 for a long time.

When setting specific operations on the screen of the navigation system (GPS) 110, for example, it is possible to input the on-time for certain seconds with respect to switches and the like (e.g., an accelerator pedal, a brake pedal, a hazard switch, a directional indicator, a wiper, an ESP-off switch, and an ADAS switch). When the user makes a setting by operating actual switches such that upon setting an operation time to 2.6 seconds, the next operation which may continue for 2.6 seconds or more, 3 seconds or more, plus 2 seconds can be treated as the same operation. That is, a switch operation time may have a certain temporal width. In this connection, it is possible to display a screen for checking the setting content of specific operations on the navigation system (GPS) 110 or the mobile terminal 200. Alternatively, it is possible to record the setting content of specific operations in the mobile terminal 200.

In the present embodiment, the user may operate the navigation system 110 to perform an input process for theft prevention on the control device 100, for example, a setting of switches relating to specific operations; however, this is not a restriction. The user may perform an input process for theft prevention by using the mobile terminal 200. When the mobile terminal 200 has a GPS function installed therein, for example, it is possible to display the position information of a vehicle suited to the map information of the mobile terminal 200 by way of a communication with an in-vehicle computer (e.g., the navigation system 110). To perform a user's input operation for theft prevention by way of a mobile application, it is possible to display an input screen for specific operations on the mobile terminal 200. As input items, it is possible to mention a combination of operators relating to specific operations, the number of times for operating each operator, date and time, location, and the like.

To release the antitheft mode outside a vehicle by a user who can operate the mobile terminal 200, it is possible to display a cancel button to be operated by the user on the mobile terminal 200. As described above, the user may operate the mobile terminal 200 to perform an input process for theft prevention and a release process of the antitheft mode. The present embodiment provides two types of input methods realizing a setting process for theft prevention, thus improving conveniences for user. That is, the user can achieve the antitheft function by using an in-vehicle computer while achieving the antitheft function by using the mobile terminal 200.

The control device 100 may include a screen display unit for displaying a setting content of specific operations. Upon sharing the screen display unit with the navigation system 110, the control device 100 may include a display control unit for controlling the screen display with the navigation system 110. Since the user can set specific operations by oneself with reference to the screen display unit, the user can visually check a setting of specific operations as intended, thus preventing a user's mistake.

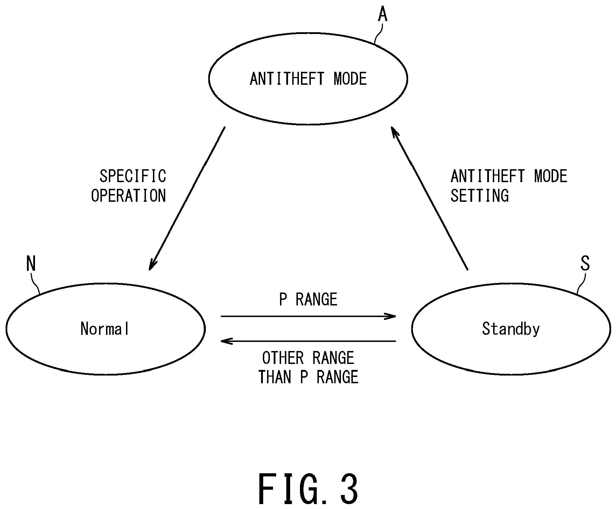

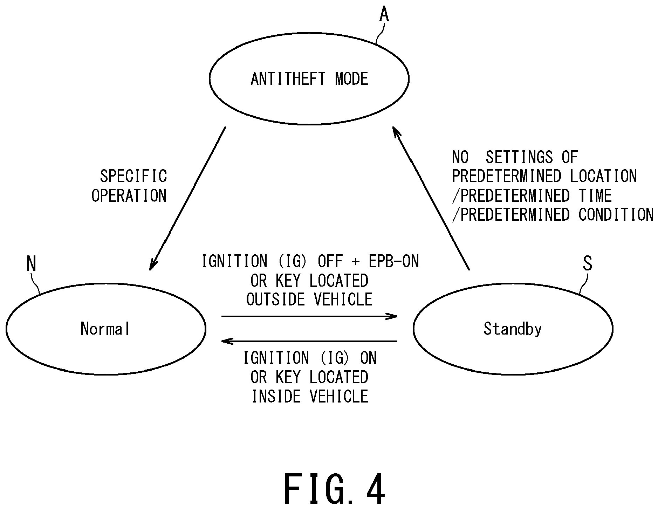

The antitheft system 1 (particularly, the control device 100) according to the present embodiment provides three modes for theft prevention using the EPB 10 of a vehicle. Figs. 3 and 4 shows a transition among three modes, i.e., an antitheft mode (A), a normal mode (N), and a standby mode (S).

Next, the antitheft system 1 for activating or releasing the antitheft mode (A) using the EPB 10 will be described with reference to Figs. 3 and 4. Fig. 3 shows a mode transition diagram of the antitheft system 1 according to the first embodiment, while Fig. 4 shows a mode transition diagram of the antitheft system 1 according to the second embodiment. Figs. 3 and 4 show the transitions among three modes; however, these transitions are illustrative and not restrictive.

In the mode transition diagram shown in Fig. 3, the antitheft system 1 proceed to the standby mode (S) when the user switches over a shift lever (or its shift position) to a parking (P) range in the normal mode (N). Then, when the user switches to a shift position other than the P range, the standby mode (S) will be returned to the normal mode (N). When the user switches to the P range to park a vehicle but then switches to another shift position to move a vehicle, it is unnecessary to prepare for the transition to the antitheft mode (A), but it is necessary to release the standby mode (S).

When the user's frequency of using the antitheft mode (A) (or the user's frequency of transition to the antitheft mode (A)) is high, the antitheft system 1 counts the user's frequency of using the antitheft mode (A), which is compared to a predetermined threshold value. The user's frequency is counted for a predetermined time (e.g., each time zone or each day) and compared to a predetermined threshold value which is set for each predetermined time. When the count value representing the user's frequency exceeds the predetermined threshold value, the antitheft system 1 displays a recommendation screen on the display of a vehicle in the standby mode (S) .

As the recommendation screen, for example, it is possible to display a message or an image (e.g., emoji) requesting a setting of the antitheft mode on the screen. Alternatively, it is possible to reproduce a predetermined message in speech instead of displaying the recommendation screen. For example, the EPB controller 102 of the control device 100 may cooperate with the navigation system 110 to display a recommendation screen. Alternatively, it is possible to display a recommendation screen on the mobile terminal 200 under the control of the control device 100 communicating with the mobile terminal 200 by way of the communication device 100. In this connection, it is possible to provide a counter inside the EPB controller 102 for the purpose of counting the user's frequency of using the antitheft mode (A), wherein the EPB controller 102 may generate a command when the count value exceeds the threshold value and transmit the command to the navigation system 110 or the mobile terminal 200, thus displaying a recommendation screen.

When the user makes a setting of the antitheft mode (A) upon watching the recommendation screen, the antitheft system 1 proceeds to the antitheft mode (A) from the standby mode (S) (i.e., an EPB-on event). The transition to the antitheft mode (A) according to the user's setting can be realized by the same operations for releasing the antitheft mode (A) such as a setting of the navigation system 110 or the mobile terminal 200 on the screen, pressing the EPB switch 101 for a long time at the parking time, multiple times for repeatedly operating the EPB switch 101, or combinations of other switches. The user's setting of the antitheft mode (A) can be made by operating switches inside a vehicle (e.g., the EPB switch 101) by operating an icon displayed on a touch panel of a vehicle or an icon of a mobile application of the mobile terminal 200. When the user performs specific operations in the antitheft mode (A), the antitheft mode (A) is released such that the antitheft system 1 will return to the normal mode (N).

Next, the antitheft mode (A), which is a feature of the present embodiment, will be described in detail. As the parking position of a vehicle, the present embodiment can set a predetermined range of an area proximate to the location at which the driver makes the transition to the antitheft mode (A). As the timing to display a screen for requesting the driver to make the transition to the antitheft mode (A), it is possible to set the timing at which the driver has performed each of specific operations by a half or more of the preset number times for performing each specific operation. It is possible to display the screen when the vehicle is stopped such that the user (or the driver) changes the shift position to the P range. Since the navigation system 110 or the mobile terminal 200 can display the setting content of specific operations which can be recorded in a storage device (e.g., semiconductor memory or a hard disk drive) in the vehicle or memory (e.g., ROM or RAM) of the mobile terminal 200, it is possible to read and check the setting content of specific operations by the user.

In the present embodiment, the mobile terminal 200 has its security function different than the key of a vehicle, wherein a mobile application can release the antitheft mode (A) using the EPB 10 when the user designates a password and sets a predetermined operation with the mobile terminal 200. The user's predetermined operations may be combinations of on/off states of various switches in the vehicle. In addition, it is possible to remotely release the antitheft mode (A) of the vehicle using the mobile terminal 200 in the remote place. Alternatively, it is possible to permit activation or release of the antitheft mode (A) upon recognizing on/off states of various sensors in the vehicle.

The first embodiment allows for the user setting to make the transition to the antitheft mode (A); however, it is possible to set an inhibition condition to inhibit the automatic transition to the antitheft mode (A). The inhibition condition can be set only in the ignition (IG) cycle for releasing the antitheft mode (A). For example, the ignition cycle may be a period from the ignition-on event, in which the driver starts an electric motor or an engine of a vehicle using the key, to the ignition-off event. It is possible to improve the security performance of a vehicle since a specific person who holds the key of a vehicle and who knows the method for releasing specific operations is solely allowed to set the inhibition condition.

The user may use the mobile terminal 200 to set the inhibition condition against the automatic transition to the antitheft mode (A). As the inhibition condition, it is possible to set a predetermined time or less which elapses after the stoppage of a vehicle or after the key is brought outside the vehicle. The inhibition condition is convenient for the driver who might leave the vehicle in a short time when going shopping in a convenience store. The possibility of a vehicle to be stolen is assumed to be low in a predetermined short time, and it is burdensome for the driver to release the antitheft mode (A) by performing specific operations when the driver returns to the vehicle.

The antitheft system 1 may allow the user to set a certain condition for normal transition to the antitheft mode (A) upon satisfying both the ignition (IG) off event and the EPB-on event. The condition for normal transition to the antitheft mode (A) may refer to the condition in which transition to the EPB-on event is triggered by a switching operation, the condition in which automatic transition to the EPB-on event is made in an ignition (IG) off event, and the condition in which automatic transition to the EPB-on event is made at the stoppage of a vehicle. The user may arbitrarily select the preferable condition relating the user's set time or place (e.g., the user's designated parking area). When a vehicle is parked in a home garage equipped with a shutter, for example, it is possible to determine that the antitheft system 1 will not allow for the transition to the antitheft mode (A) in a weekday or a time zone in which the vehicle is regularly parked in the parking lot of a workplace. Alternatively, the antitheft system 1 may allow for the transition to the antitheft mode (A) only when the user leaves a vehicle for the user's predetermined time or more.

Upon setting the condition for normal transition to the antitheft mode (A) and the user's designated condition for transition to the antitheft mode (A) at once, the antitheft system 1 may keep those conditions until the user changes settings.

A user who might made a temporal setting as to whether to make the transition to the antitheft mode (A) or not may park the vehicle at the place which is set to make the normal transition to the antitheft mode (A). In this case, the antitheft system 1 may inquire the user about a setting as to whether to make the transition to the antitheft mode (A) by displaying on the screen a message or information recommending the transition to the antitheft mode (A) when the user changes the shift position of a vehicle to the P range.

The antitheft system 1 allows for the transition to the antitheft mode (A) triggered by an event in which the user brings the key outside a vehicle.

For the purpose to provide a superior method in terms of convenience when using the EPB 10 for theft prevention, the antitheft system 1 according to the first embodiment shall include specific operations in the release condition of the antitheft mode (A). The control device 100 of the antitheft system 1 may allow for releasing of the EPB 10 irrespective of ON/OFF conditions of power associated with the user's preset specific operations, wherein releasing the EPB 10 will be inhibited without detecting specific operations.

Under the predetermined condition, the antitheft system 1 does not allow for cancellation of the antitheft mode (A) without specific operations by the user (e.g., the driver or the owner of a vehicle), in other words, the antitheft system 1 cannot permit the EPB 10 to be released such that any person cannot move the vehicle, which contributes to theft prevention.

In the ignition (IG) off state, the antitheft system 1 allows for cancellation of the antitheft mode (A) by way of specific operations. Accordingly, the antitheft system 1 can be adapted to the situation for parking a vehicle at a place having no fear of the vehicle being stolen in winter and the situation in which the vehicle being inspected needs to release the antitheft mode (A) without turning on the ignition (IG), which is convenient for users.

The antitheft system 1 may include a communication device configured to establish a wireless communication with the in-vehicle network and the mobile terminal (e.g., a mobile terminal and a smartphone). Specific operations can be implemented using a digital key having the key function of a vehicle and a digital key of a mobile terminal having the function to release the antitheft mode (A) .

According to the configuration described above, it is possible to release the antitheft mode (A) by use of the digital key of a mobile terminal in addition to the key of a vehicle. By using the digital key of a mobile terminal in addition to the key of a vehicle, it is possible to assure double security, and it is possible to improve the robustness in theft prevention. The driver (or the owner) of a vehicle may release the antitheft mode (A) by operating an application (or a mobile application) of the mobile terminal. Accordingly, it is possible to prevent the troublesome operation for releasing the antitheft mode (A) .

In the mode transition diagram shown in Fig. 4, the antitheft system 1 proceeds to the standby mode (S) upon detecting an ignition (IG) off event and an EPB-on event in the normal mode (N) or upon detecting that the key is brought outside a vehicle. Upon detecting the ignition (IG) on event or the presence of the key in the vehicle in the standby mode (S), the antitheft system 1 returns to the normal mode (N). Fig. 4 is a mode transition diagram for automatic transition to the antitheft mode (A), and therefore the antitheft system 1 automatically proceeds to the antitheft mode (A) from the standby mode (S) since the user does not need to set a predetermined place, a predetermined time, and a predetermined condition.

If the user determines in advance the predetermined place, the predetermined time, and the predetermined condition for activating the antitheft mode (A), the antitheft system 1 may automatically proceed to the antitheft mode (A) from the standby mode (S) when the position of a vehicle and its time zone match the predetermined condition. When the user performs specific operations in the antitheft mode (A) to thereby release the antitheft mode (A), the antitheft system 1 will return to the normal mode (N).

Upon setting the antitheft mode (A), the present embodiment does not allow for cancellation of the antitheft mode (A) without specific operations under the predetermined condition, thus inhibiting the vehicle from being moved by somebody. For this reason, it is possible to prevent the vehicle from being stolen irrespective of any fraudulent operation applied to the vehicle by the third party. Since the antitheft system 1 allows for cancellation of the antitheft mode (A) by specific operations in the ignition (IG) off state, the present embodiment may effectively fulfill the functionality when the vehicle is parked at a place having no fear of the vehicle being stolen or when the vehicle is subjected to inspection requesting cancelation of the antitheft mode (A) without turning on the ignition (IG), and therefore it is possible to improve convenience of an electric parking brake.

The antitheft system 1 according to the second embodiment is characterized by automatic transition to the antitheft mode (A) under the predetermined condition.

In the second embodiment, it is possible to prevent the vehicle from being stolen since the second embodiment does not allow for cancellation of the antitheft mode (A) without specific operations under the predetermined condition, in other words, the second embodiment does not permit the EPB 10 to be released, thus inhibiting the vehicle from being moved by somebody. Due to automatic transition to the antitheft mode (A), the second embodiment can adapt to the driver who might forget to make the transition to the antitheft mode (A) under the condition requiring theft prevention. The second embodiment differs from the first embodiment in that the driver (or the owner) of a vehicle does not need to make any setting about transition to the antitheft mode (A).

The second embodiment may set the predetermined condition as a power-off event of power for supplying electric power to electronic components (e.g., ECUs) of a vehicle and an event of detecting activation of an electric parking brake. The second embodiment automatically proceeds to the antitheft mode (A) on the assumption that the user (or the driver) might leave the vehicle. Due to the provision of the predetermined condition described above, it is possible to adapt to the driver who might forget to make transition to the antitheft mode (A) in the situation presumably requiring theft prevention. In addition, due to the automatic transition to the antitheft mode (A) upon establishing the predetermined condition, the driver of the vehicle does not need to make any setting about the transition to the antitheft mode (A). In this connection, a power-off event for stopping power supply to electronic components of a vehicle may refer to an ignition (IG) off event.

The second embodiment may set the predetermined condition as an event of detecting that the key is brought outside the vehicle. Since the predetermined condition is established upon simply detecting that the key is brought outside the vehicle, it is possible to adapt to the user (or the driver) who might forget to make transition to the antitheft mode (A) in the situation requiring transition to the antitheft mode (A). If the key of a vehicle is an electronic key configured to communicate with an in-vehicle computer, it is possible to detect that the key is brought outside the vehicle by the in-vehicle computer.

In the second embodiment, the control device 100 may selectively perform automatic transition to the antitheft mode (A) or manual transition to the antitheft mode (A) according to a user operation. Since the user can arbitrarily select automatic transition or transition by a user operation, it is possible to improve the antitheft system 1 in convenience. Since the second embodiment allows for transition to the antitheft mode (A) only when the user makes a setting by oneself, it is possible to improve convenience in activating or releasing the antitheft mode (A) using the EPB 10.

In the second embodiment, the control device 100 may set an inhibition condition for inhibiting automatic transition to the antitheft mode (A). By setting the inhibition condition (e.g., the date and time and the position of a vehicle), it is possible to prevent transition to the security mode (e.g., an antitheft mode) of a vehicle when the user (or the driver) judges it unnecessary to proceed to the antitheft mode (A). That is, the user who is currently driving a vehicle does not need to perform specific operations for releasing the security mode, and therefore it is possible to improve the antitheft system 1 in convenience. Even when setting that the vehicle shall automatically proceed to the security mode, for example, the antitheft system 1 can determine that the vehicle shall not proceed to the security mode solely upon satisfying the inhibition condition by a user's setting.

The second embodiment may set the inhibition condition as a predetermined geographical region set by the user. Accordingly, the user does not need to normally perform specific operations in the predetermined geographical region not requiring transition to the antitheft mode (A), and therefore it is possible to improve the antitheft system 1 in convenience. As the predetermined geographical region, it is possible to assume a parking lot equipped with a fence having a high frequency of usage in home and in workplace.

The second embodiment may set the inhibition condition representing at least one of a predetermined date, time, and weekday which will be set by the user. It is possible to improve the antitheft system 1 in convenience since the user does not need to normally perform specific operations on at least one of the predetermined date, time, and weekday not requiring transition to the antitheft mode (A). As the predetermined date, it is possible to assume a time zone (e.g., a home-staying time, a workplace-attendance time, a weekday in home staying or workplace attendance) in which the user might park the vehicle in a parking lot equipped with a fence in home or in workplace.

In the second embodiment, the antitheft system 1 may include the communication device 170 configured to establish a wireless communication with the in-vehicle network and the mobile terminal (mobile phone) 200. The mobile terminal 200 has a digital key having the key function of a vehicle and an application having the function to allow for cancellation of the antitheft mode (A). Accordingly, it is possible to implement specific operations using the digital key of the mobile terminal 200.

In the second embodiment, the user may set specific operations for releasing the antitheft mode (A) to the control device 100 by operating the mobile terminal 200. The user can set specific operations to the control device 100 by operating the mobile terminal 200. Accordingly, the user does not need to make a setting of specific operations by operating an in-vehicle computer inside the vehicle, thus improving the antitheft system 1 in convenience.

Similar to the first embodiment, the second embodiment may set specific operations as combinations of sensors and/or switches of a vehicle which can make a communication through an in-vehicle network or which can be recognized in on/off states. In addition, the control device 100 may provide a screen display unit for displaying the setting content of specific operations.

Next, the functionality of the present embodiment will be described with reference to Figs. 5 to 7. The EPB controller 102 of the control device 100 has at least the functions to set specific operations and to control the antitheft mode (A). Specific operations can be set by combining a plurality of operators belonging to the specific operation unit 103 in terms of the number of times for operating each operator, the order of operating operators, and the operating timing for each operator. The setting content of specific operations for automatic transition to the antitheft mode (A) can be set in advance in the manufacturing factory of vehicles, however, the user may arbitrarily set the setting content of specific operations. As shown in Figs. 3 and 4, controlling the antitheft mode (A) refers to controlling transition to the antitheft mode (A) or cancellation of the antitheft mode (A) .

Fig. 5 is a flowchart showing an operation procedure for releasing the antitheft mode (A) by the antitheft system 1 for a vehicle according to the present embodiment (see steps S101 to S103) .

Upon detecting an on-event of the EPB switch 101, the control device 100 will be on standby until it detects specific operations to be set by operating any one of switches in the specific operation unit 103 (see S101 to S102). The flow of Fig. 5 should be ended when the control device 100 does not detect an on-event of the EPB switch 101 (i.e., NO in S101). The EPB controller 102 may release the antitheft mode (A) in cooperation with the specific operation unit 103 upon detecting that specific operations are determined in the EPB-on state in advance and performed (see S102 to S103). The EPB 10 can be released when the antitheft mode (A) is released.

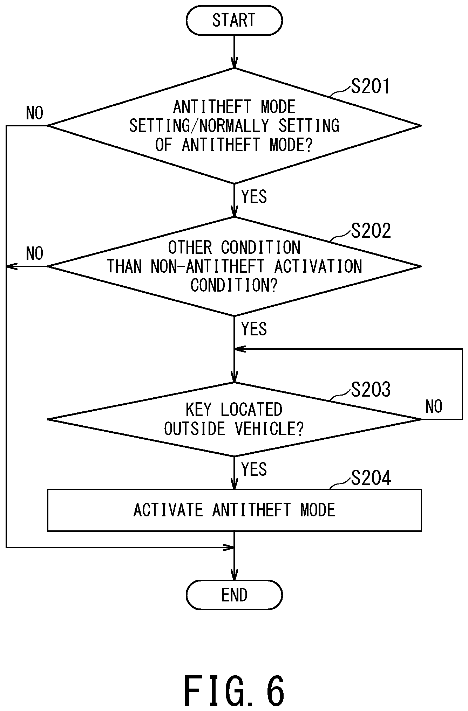

Fig. 6 is a flowchart showing a first procedure for activating the antitheft mode (A) in the present embodiment (see steps S201 to S204). Fig. 6 is an example of the control procedure for automatic transition to the antitheft mode (A) from the standby mode (S) in the mode transition diagram shown in Fig. 4.

The first procedure shown in Fig. 6 determines whether the present condition matches a non-antitheft activation condition or not (S202). When the user leaves the vehicle for a short time or when the user parks the vehicle in home garage or in a parking lot of a workplace, the user does not unnecessarily dare to activate the antitheft mode (A). Herein, the non-antitheft activation condition refers to the condition in which the user does not unnecessarily dare to activate the antitheft mode (A). The first procedure will be ended when the present condition matches the non-antitheft activation condition even when the vehicle is normally set to the antitheft mode (e.g., an EPB-on event) (see S201 through S202). Even in the EPB-on event, the antitheft system 1 shall activate the antitheft mode (A) (S204) upon detecting that the key is brought outside the vehicle (see S202 to S203) when the present condition is other than the non-antitheft activation condition (or the present condition indicates the situation in which the vehicle may proceed to the antitheft mode (A)) (i.e., YES in S202).

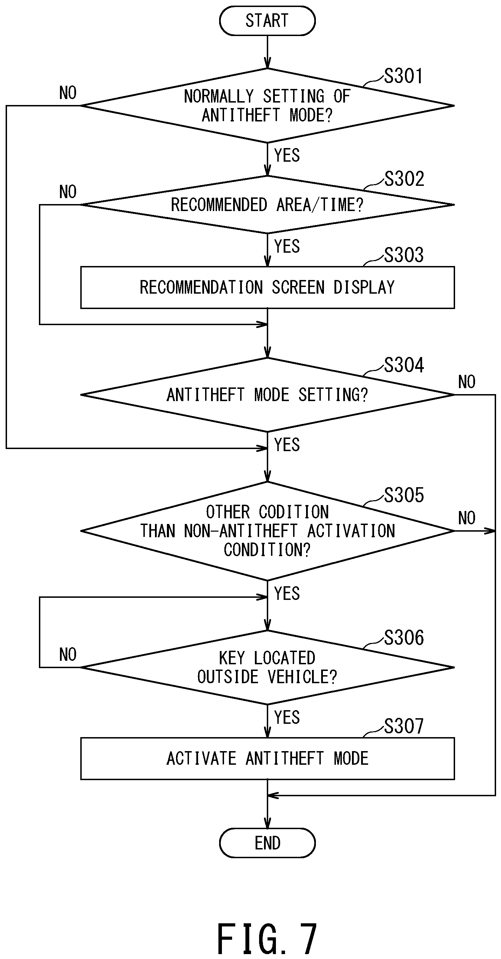

Fig. 7 is a flowchart showing a second procedure for activating the antitheft mode (A) in the present embodiment (see steps S301 to S307). Fig. 7 is an example of the control procedure for recommending transition to the antitheft mode (A) from the standby mode (S) in the mode transition diagram shown in Fig. 3.

In the second procedure shown in Fig. 7, the antitheft system 1 displays on a display mounted on a vehicle a recommendation screen for recommending the antitheft mode (A) to the user (S303) upon making the normal setting of the antitheft mode (A) (i.e., an EPB-on event) and upon making compatible settings relating to a time zone and a recommendation area for activating the antitheft mode (A) (see S301 to S302). Due to a failure of setting the time zone and the recommendation area for activating the antitheft mode (A), the antitheft system 1 does not display the recommendation screen. When the user watching the recommendation screen displayed on a screen is decided to set the antitheft mode (A) (S304), the flow proceeds to step S307 from step S305 (i.e., a similar process as step S202 to step S204 shown in Fig. 6). Without the normal setting of the antitheft mode (A) in step S301, the flow proceeds to step S307 from step S305. When the user does not set the antitheft mode (A) in step S304, a series of steps S305 through S307 will be skipped.

The flow will proceed to step S305 when the normal setting of the antitheft mode (A) is not made in the antitheft system 1, or when the normal setting of the antitheft mode (A) is made in the antitheft system 1 (YES in S301) while the user sets the antitheft mode (A) (YES in S304) .

In step S305 in Fig. 7, the antitheft system 1 determines whether the vehicle is set to other conditions than the non-antitheft activation condition or not. When the vehicle satisfies the non-antitheft activation condition (NO in S305), a series of steps S306 through S307 will be skipped. When the vehicle is set to other conditions than the non-antitheft activation condition (YES in S305), the antitheft system 1 activates the antitheft mode (A) (S307) upon detecting that the key is brought outside the vehicle (YES in S306).

In the second procedure shown in Fig. 7, the antitheft system 1 activates the antitheft mode (A) upon detecting that the key is brought outside the vehicle when the user watching the recommendation screen sets the antitheft mode (A) while the vehicle is set to other conditions than the non-antitheft activation condition.

As the hardware of the control device 100 of a vehicle, it is possible to configure the control device 100 using the EPB switch, a processor (e.g., a CPU), a memory (e.g., semiconductor memory), and an actuator such as a motor for operating the EPB 10. In addition, it is possible to store in the memory combinations of operators relating to specific operations and setting contents relating to on/off states of operators as well as transition conditions, release conditions, and release inhibition conditions about the antitheft mode (A). Since the flows of Fig. 5 to Fig. 7 can be stored in the memory as programs, the processor may execute programs to activate the antitheft mode (A).

Lastly, the present invention shall not be limited to the foregoing embodiments, wherein hardware configurations and software contents shall not be restrictive. The technical scope of the present invention shall be defined by claims, and therefore the present invention shall embrace various design changes and modifications without departing from the gist of the invention.

### REFERENCE SIGNS LIST

1 antitheft system
10 electric parking brake (EPB)
100 control device
101 EPB switch
102 electric parking brake controller
103 specific operation unit
104 body controller
110 navigation system (GPS)
120 key check ECU
130 ESP-off switch
140 brake controller
150 accelerator opening sensor
160 ADAS switch
170 communication device

## Claims

1. An antitheft system for a vehicle comprising:
an electric parking brake to be electrically operated and configured to restrict rotation of wheels of the vehicle;
a specific switch configured to activate the electric parking brake; and
a control device associated with specific operations for releasing the electric parking brake set in advance, which is configured to provide an antitheft mode for permitting the electric parking brake to be released upon detecting the specific operations but for inhibiting the electric parking brake from being released without detecting the specific operations, thus making automatic transition to the antitheft mode under a predetermined condition.

2. The antitheft system for a vehicle according to claim 1, wherein the predetermined condition of the control device is a power-off event of power for supplying electric power to a plurality of electronic components mounted on the vehicle upon detecting activation of the electric parking brake.

3. The antitheft system for a vehicle according to claim 1, wherein the predetermined condition of the control device is an event of detecting that a key of the vehicle is brought outside the vehicle.

4. The antitheft system for a vehicle according to claim 1, wherein the control device is configured to selectively make the automatic transition to the antitheft mode or a transition by a user operation.

5. The antitheft system for a vehicle according to claim 1, wherein the control device is configured to receive a setting of an inhibition condition for inhibiting the automatic transition to the antitheft mode.

6. The antitheft system for a vehicle according to claim 5, wherein the inhibition condition set to the control device is a predetermined geographical region set by a user.

7. The antitheft system for a vehicle according to claim 5, wherein the inhibition condition set to the control device indicates at least one of a predetermined date, time, and weekday set by a user.

8. The antitheft system for a vehicle according to claim 1, further comprising a communication device configured to establish a wireless communication with a mobile terminal, wherein the specific operations are performed by using a digital key having a key function for the vehicle and a digital key of the mobile terminal having an application realizing a function to release the electric parking brake.

9. The antitheft system for a vehicle according to claim 8, wherein the specific operations are set to the control device by operating the mobile terminal.

10. The antitheft system for a vehicle according to claim 1, wherein the specific operations are combinations of a sensor and/or a switch of the vehicle having a communication function or a function of recognizing ON/OFF states via an in-vehicle network.

11. The antitheft system for a vehicle according to claim 10, wherein the control device includes a screen display unit for displaying a setting content of the specific operations.
